Europäisches Patentamt

European Patent Office

Office européen des brevets

(11) Veröffentlichungsnummer: **0 391 902 B1**

(12) **EUROPÄISCHE PATENTSCHRIFT**

(45) Veröffentlichungstag der Patentschrift: **21.10.92**

(21) Anmeldenummer: **88907307.8**

(22) Anmeldetag: **31.08.88**

(86) Internationale Anmeldenummer:
**PCT/EP88/00782**

(87) Internationale Veröffentlichungsnummer:
**WO 89/02536 (23.03.89 89/07)**

(51) Int. Cl.⁵: **F04D 29/04**

(54) **MECHANISCH ANGETRIEBENER LADER FÜR EINE BRENNKRAFTMASCHINE.**

(30) Priorität: **05.09.87 DE 3729888**

(43) Veröffentlichungstag der Anmeldung:
**17.10.90 Patentblatt 90/42**

(45) Bekanntmachung des Hinweises auf die
Patenterteilung:
**21.10.92 Patentblatt 92/43**

(84) Benannte Vertragsstaaten:
**DE FR GB IT NL SE**

(56) Entgegenhaltungen:
**EP-A- 0 158 681      WO-A-84/04136**
**DE-C- 582 797       FR-A- 1 524 746**
**FR-A- 2 580 723      US-A- 3 097 895**
**US-A- 3 330 476**

(73) Patentinhaber: **ZF FRIEDRICHSHAFEN Aktien-**
**gesellschaft**
**Löwentaler Strasse 100 Postfach 2520**
**W-7990 Friedrichshafen 1(DE)**

(72) Erfinder: **WINKELMANN, Siegfried**
**Birkenstra e 15**
**W-7992 Tettnang(DE)**
Erfinder: **SCHLICHTIG, Karl**
**Virchowstra e 20**
**W-7990 Friedrichshafen(DE)**
Erfinder: **BREISCH, Harald**
**Brühlstra e 10**
**W-7993 Kressbronn(DE)**

(74) Vertreter: **Raue, Reimund**
**ZF FRIEDRICHSHAFEN Aktiengesellschaft**
**Löwentalerstrasse 100 Postfach 2520**
**W-7990 Friedrichshafen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen mechanisch angetriebenen Lader für eine Brennkraftmaschine mit einer von der Brennkraftmaschine über eine Eingangswelle und ein Übersetzungsgetriebe antreibbaren Rotorwelle mit Rotor, die koaxial zur Eingangswelle verläuft, in einer Aufnahmebohrung eines Getriebegehäuseteils des Laders gelagert ist und ein Ausgangsrad des Übersetzungsgetriebes aufnimmt.

Ein mechanisch angetriebener Lader der vorgenannten Gattung ist bekannt aus der FR-A 25 80 723. Das zwischen der Eingangswelle und der Rotorwelle angeordnete Übersetzungsgetriebe ist dabei in Vorgelegebauweise ausgebildet, wodurch sich, bezogen auf die Längsmittelachse von Eingang- und Rotorwelle, einseitig eine relativ große radiale Erstreckung ergibt. Aufgrund dieser Vorgelegebauweise wirken außerdem sowohl auf die Eingangsals auch auf die Rotorwelle einseitig hohe Kräfte, so daß eine im Getriebegehäuseteil angeordnete Führungshülse erforderlich ist, die Schrägkugellager beidseitig des Ausgangsrades aufnimmt und an deren Umfang über ein Wälzlager die Eingangswelle gelagert ist. Das Übersetzungsgetriebe ist aufgrund seiner Lagerung von Eingangs- und Rotorwelle auf einer Führungshülse sehr aufwendig und eignet sich aufgrund der einseitigen Belastungen nicht zur Übertragung der bei einem Laderantrieb gewünschten hohen Wellendrehzahlen.

Der vorliegenden Erfindung liegt daher die Aufgabe zugrunde, einen kompakten mechanischen Antrieb eines Laders zu schaffen, dessen Lagerung der Rotorwelle trotz hoher Wellendrehzahlen eine größtmögliche Lebensdauer erreichen soll.

Diese Aufgabe wird nach dem kennzeichnenden Teil des Anspruchs 1 erfindungsgemäß dadurch gelöst, daß das Übersetzungsgetriebe als Planetengetriebe und das Ausgangsrad als Sonnenrad ausgebildet sind, wobei eine zwischen dem Sonnenrad und dem Rotor angeordnete Lagerung der Rotorwelle gegenüber der Aufnahmebohrung radiales und und axiales Spiel aufweist und die Lagerung mittels Dämpfungsmittel in dem durch das radiale Spiel geschaffenen Ringspalt schwimmend geführt ist. Die Ausbildung des Übersetzungsgetriebes als Planetengetriebe bei einseitig des Sonnenrades angeordneter Lagerung führt zu einer sehr kompakten Bauweise des Antriebes mit günstiger Kraftverteilung, und es kann eine Schwingungsanregung der Rotorwelle durch die Eingangswelle verhindert werden. Das radiale Spiel der Lagerung führt zu einer deutlichen Verringerung der aus der Restunwucht der Rotorwelle und des Sonnenrades resultierenden Lagerbelastung. Aufgrund des radialen Spiels wird nämlich der Freiheitsgrad der Rotorwellenlagerung derart vergrößert, daß eine Rotation der Rotorwelle um ihre Schwerachse ermöglicht ist. Die aufgrund der Massenkräfte auftretenden Lagerkräfte können somit erheblich reduziert werden. Das axiale Spiel ermöglicht die freie Bewegung der Lagerung innerhalb des Radialspiels.

Aus der EP-A 01 58 681 ist ein von einem Elektromotor über einen Stirnradtrieb angetriebener Lader bekannt. Dabei ist eine Rotorwelle beidseitig ihres Eingangsrades gelagert. Jede dieser Lagerungen ist von einer zylindrischen Führungshülse umgeben, die ihrerseits schwimmend im Getriebegehäuse angeordnet ist. Durch diese schwimmende Lagerung sollen Schwingungen im Antriebssystem vermieden werden, und der Achsabstand zwischen Eingangswelle und Rotorwelle soll auf ein präzises Maß festgelegt sein. Aufgrund dem beidseitig des Eingangsrades angeordneten Lagerung und der Ausbildung des Übersetzungsgetriebes als Stirnradtrieb weist die Anordnung relativ große radiale und axiale Abmessungen auf, die bei einer geplante Verwendung des mechanisch angetriebenen Laders an einer Brennkraftmaschine von Nachteil sind. Außerdem ist ein derartiger Stirnradtrieb aufgrund der einseitigen Krafteinleitung in die Rotorwelle nicht für die Übertragung der sehr hohen Wellendrehzahlen geeignet.

Weitere Ausgestaltungen der Erfindung sind in den Unteransprüchen 2 bis 8 beschrieben. Gemäß Anspruch 2 soll bei einem mechanisch angetriebenen Lader mit einer Lagerung der Rotorwelle in der Aufnahmebohrung über zwei in einer Führungshülse angeordnete Schrägkugellager, bei der der Rotor mit der Rotorwelle, den Schrägkugellagern, der Führungshülse sowie dem Sonnenrad als Einheit vormontierbar und auswuchtbar ist, die Führungshülse schwimmend in der Aufnahmebohrung geführt sein und die Führungshülse mittels eines radialen Bundes, den sie an ihrem dem Rotor zugewandten Ende aufweist, und mittels eines an ihr befestigten Ringes mit axialen Spiel zwischen Anlageflächen des gehäusefesten Abschnitts geführt sein. Bei vorhandener Möglichkeit, die gesamte Einheit für sich vorzumontieren und auszuwuchten, kann somit die Rotorwelle über die gesamte Länge dieser Führungshülse schwimmend in der Aufnahmebohrung geführt werden. Der radiale Bund und der an der Führungshülse zu befestigende Ring lassen eine einfache Montage der vormontierten Einheit zu und sorgen für eine ausreichende Axialfixierung der Führungshülse im Getriebegehäuseteil.

Als Dämpfungsmittel eignen sich gemäß den Ansprüchen 3 und 4 wahlweise oder kombiniert das der Lagerung zugeführte Schmieröl oder im Ringspalt angeordnete Ringe, wobei diese Ringe als Dichtungselemente gleichzeitig für einen sicheren Übertritt des Schmieröls zur Lagerung sorgen und das Planetengetriebe gegenüber dem Ladegebläse abdichten.

Weiterhin soll gemäß Anspruch 5 die Lagerung zwei Schrägkugellager mit großem Stützabstand auf der Rotorwelle aufweisen. Diese Schrägkugellager sind dazu in der Lage, hohe radiale und axiale Kräfte aufzunehmen. Nach Anspruch 6 soll zwischen der Rotorwelle und der Führungshülse ein Wellendichtring angeordnet sein, und die Schmieröllzufuhr zu den Schrägkugellagern soll in einem zwischen ihnen liegenden Bereich erfolgen. Auf diese Weise wird verhindert, daß die vom Rotor verdichtete Luft Schmieröl aus den Lagern herausbläst.

Alternativ dazu besteht gemäß Anspruch 7 die Möglichkeit, zwischen der Rotorwelle und der Führungshülse einen Wellendichtring anzuordnen, dessen Dichtlippe und der Ladedruck von der Rotorwelle abhebt, wobei die Ladeluft Schmieröl aus einer unmittelbar hinter dem Wellendichtring einmündenden Zulaufbohrung in die Schrägkugellager fördert. Bei fehlendem Ladedruck bzw. Saugbetrieb der Brennkraftmaschine sperrt die Dichtlippe den Schmiermittel fördernden Bereich gegenüber dem Rotor ab. Schließlich kann gemäß Anspruch 8 die Führungshülse an ihrem Außenmantel auf einem Sehnenverlauf hergestellte Ausnehmungen (Schmiermittel-Sammelräume) aufweisen, die jeweils getrennt mit Schmiermittelbohrungen für die Ölzu- und -ableitung verbunden sind.

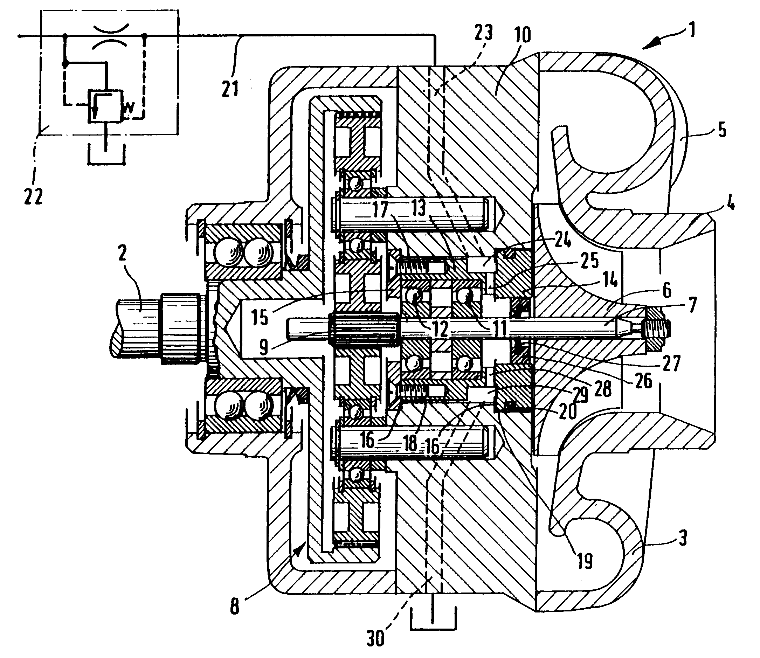

Zur weiteren Erläuterung der Erfindung wird auf die Zeichnung verwiesen, in der ein Ausführungsbeispiel im Längsschnitt dargestellt ist. In der einzigen Fig. ist mit 1 ein mechanisch angetriebener Lader bezeichnet, der zur Aufladung einer nicht dargestellten Brennkraftmaschine dient und von dieser aus mechanisch über eine Eingangswelle 2 antreibbar ist. Die Laderbaueinheit 1 besteht aus einem Verdichtergehäuse 3 mit einem axialen Luftansaugstutzen 4 und einem tangential verlaufenden Ladeluststutzen 5. Im Verdichtergehäuse 3 ist weiterhin ein Rotor 6 angeordnet, der über eine Rotorwelle 7 mit hoher Drehzahl angetrieben wird. Der Antrieb der Rotorwelle 7 erfolgt von der Eingangswelle 2 her über einen Planetensatz 8 auf dessen drehfest auf der Rotorwelle 7 angeordnetes Sonnenrad 9. Die Rotorwelle 7 ist in einem Getriebegehäuseteil 10 gelagert.

Dabei besteht die Lagerung der Rotorwelle 7 aus zwei Schrägkugellagern 11 und 12, die zwischen dem Planetensatz 8 und dem Rotor 6 angeordnet sind. Dabei umgibt die beiden Schrägkugellager 11 und 12 eine Führungshülse 13, die einen radialen Bund 14 sowie einen Ring 15 zur axialen Lagefixierung an Anlageflächen 16 des Getriebegehäuseteils 10 dienen. Dabei ist die Führungshülse 13 mit einem radialen Spiel 17 in eine Aufnahmebohrung 18 des Getriebegehäuseteils 10 eingesetzt. Die axialen Fixierungen der Führungshülse in Form des radialen Bundes 14 und des Ringes 15 weisen gegenüber den Anlageflächen 16 des Getriebegehäuses 10 ein axiales Spiel 19 auf.

Zwischen der Führungshülse 13 und der Aufnahmebohrung 18 ist ein elastischer Ring 20 angeordnet, der zum einen innerhalb des radialen Spiels 17 als Dämpfungsmittel wirkt und zum anderen den durch das radiale Spiel 17 gebildeten Ringspalt gegenüber dem im Verdichtergehäuse 3 anstehenden Ladedruck abdichtet. Der Lader 1 ist über eine Schmierölleitung 21 an die Schmiermittelversorgung der Brennkraftmaschine angeschlossen, wobei innerhalb dieser Schmierölleitung 21 ein Stromregelventil 22 angeordnet ist, das die dem Lader 1 zugeführte Schmierölmenge unabhängig von der Drehzahl der Brennkraftmaschine konstant hält. Die Schmierölleitung 21 ist an eine im Getriebegehäuse 10 angeordnete Schmiermittelbohrung 23 angeschlossen, die in einen Schmiermittel-Sammelraum 24 einmündet. Zur Herstellung dieses Schmiermittel-Sammelraumes 24 ist am Umfang die Führungshülse durch eine Ausnehmung, die sehnenartig verläuft, hergestellt. Von diesem Schmiermittel-Sammelraum 24 gelangt das Schmieröl über zumindest eine Zulaufbohrung 25 in einen Bereich zwischen dem Rotor 6 und dem ihm benachbarten Schrägkugellager 11. Dieser Eintrittsbereich des Schmieröls ist gegenüber dem Inneren des Verdichtergehäuses 3 durch einen Wellendichtring 26 abgedichtet. Dieser Wellendichtring 26 hat zur Rotorwelle hin eine Dichtlippe, die im Querschnitt gesehen eine zu den Schrägkugellagern 11 und 12 hin gebogenen Verlauf hat, so daß sie sich unter dem Druck des Schmieröls an die Rotorwelle 7 legt, bei Auftreten eines Ladedrucks im Verdichtergehäuse hingegen etwas von der Rotorwelle 7 abhebt und einen Teilstrom der Ladeluft eintreten läßt, der das über die Zulaufbohrungen 25 zufließende Schmieröl in die Schrägkugellager 11 und 12 fördert. Aus dem Inneren der Lagerung der Rotorwelle 7 führen Ablaufbohrungen 28 zu einem weiteren Schmiermittel-Sammelraum 29, von dem aus das Schmieröl über eine Schmiermittelbohrung 30 und eine nicht dargestellte Leitung in den Ölsumpf der Brennkraftmaschine abgeleitet wird.

Der Darstellung ist zu entnehmen, daß das Schmieröl aus dem Schmiermittel-Sammelraum 24 in den durch radiales Spiel 17 hergestellten Ringspalt an der Führungshülse eindringt und auf diese Weise für eine Dämpfung der Bewegungen der Führungshülse 13 gegenüber dem Gehäuseteil 10 sorgt.

Bezugszeichen

1    Lader
2    Antriebswelle

3 Verdichtergehäuse
4 Luftansaugstutzen
5 Ladeluftstutzen
6 Rotor
7 Rotorwelle
8 Planetensatz
9 Sonnenrad
10 Getriebegehäuseteil
11 Schrägkugellager
12 Schrägkugellager
13 Führungshülse
14 Radialer Bund
15 Ring
16 Anlageflächen
17 Radiales Spiel
18 Aufnahmebohrung
19 Axiales Spiel
20 Elastischer Ring
21 Schmierölleitung
22 Stromregelventil
23 Schmiermittelbohrung
24 Schmiermittel-Sammelraum
25 Zulaufbohrung
26 Wellendichtring
27 Dichtlippe
28 Ablaufbohrungen
29 Schmiermittel-Sammelraum
30 Schmiermittelbohrung

**Patentansprüche**

1. Mechanisch angetriebener Lader (1) für eine Brennkraftmaschine mit einer von der Brennkraftmaschine über eine Eingangswelle (2) und ein Übersetzungsgetriebe (8) antreibbaren Rotorwelle (7) mit Rotor (6), die koaxial zur Eingangswelle (2) verläuft, in einer Aufnahmebohrung (18) eines Getriebegehäuseteils (10) gelagert ist und ein Ausgangsrad (9) des Übersetzungsgetriebes (8) aufnimmt, dadurch **gekennzeichnet,** daß das Übersetzungsgetriebe als Planetengetriebe (8) und das Ausgangsrad als Sonnenrad (9) ausgebildet sind, wobei eine zwischen dem Sonnenrad (9) und dem Rotor (6) angeordnete Lagerung (11, 12) der Rotorwelle (7) gegenüber der Aufnahmebohrung (18) radiales (17) und axiales Spiel (19) aufweist und die Lagerung (11, 12) mittels Dämpfungsmittel in dem durch das radiale Spiel (17) geschaffenen Ringspalt schwimmend geführt ist.

2. Mechanisch angetriebener Lader nach Anspruch 1, mit einer Lagerung der Rotorwelle (7) in der Aufnahmebohrung (18) über zwei in einer Führungshülse (13) angeordnete Schrägkugellager, wobei der Rotor (6) mit der Rotorwelle (7), den Schrägkugellagern (11, 12) der Führungshülse (13) sowie dem Sonnenrad (9) als Einheit vormontierbar und auswuchtbar ist, dadurch **gekennzeichnet,** daß die Führungshülse schwimmend in der Aufnahmebohrung geführt ist und mittels eines radialen Bundes (14), den sie an ihrem dem Rotor (6) zugewandten Ende aufweist, und mittels eines an ihr befestigten Ringes (15) mit axialem Spiel (19) zwischen Anlageflächen (16) des gehäusefesten Abschnitts (10) geführt ist.

3. Mechanisch angetriebener Lader nach Anspruch 1, dadurch **gekennzeichnet,** daß als Dämpfungsmittel ein Teilstrom des den Schrägkugellagern (11, 12) zugeführten Schmieröls dient.

4. Mechanisch angetriebener Lader nach einem der Ansprüche 1 oder 3, dadurch **gekennzeichnet,** daß als Dämpfungsmittel ein gleichzeitig den radialen Spalt (17) abdichtender elastischer Ring (20) dient.

5. Mechanisch angetriebener Lader nach Anspruch 1, dadurch **gekennzeichnet,** daß die Lagerung zwei Schrägkugellager (11, 12) mit großem Stützabstand auf der Rotorwelle (7) aufweist.

6. Mechanisch angetriebener Lader nach Anspruch 2, dadurch **gekennzeichnet,** daß zwischen der Rotorwelle (7) und der Führungshülse (13) ein Wellendichtring (26) angeordnet ist und daß die Schmierölzufuhr zu den Schrägkugellagern (11, 12) in dem zwischen ihnen liegenden Bereich erfolgt.

7. Mechanisch angetriebener Lader nach Anspruch 2, dadurch **gekennzeichnet,** daß zwischen der Rotorwelle (7) und der Führungshülse (13) ein Wellendichtring (26) angeordnet ist, dessen Dichtlippe (27) und der Ladedruck von der Rotorwelle (7) abhebt, wobei die Ladeluft Schmieröl aus einer unmittelbar hinter dem Wellendichtring (26) einmündenden Zulaufbohrung (25) in die Schrägkugellager (11, 12) fördert.

8. Mechanisch angetriebener Lader nach Anspruch 2, dadurch **gekennzeichnet,** daß die Führungshülse (13) an ihrem Außenmantel auf einem Sehnenverlauf hergestellte Ausnehmungen (Schmiermittel-Sammelräume 24, 29) aufweist, die jeweils getrennt mit Schmiermittelbohrungen (23, 30) für die Ölzu- und -ableitung verbunden sind.

**Claims**

1. Mechanically driven supercharger (1) for an internal combustion engine, with a rotor shaft (7), which can be driven by the internal combustion engine via an input shaft (2) and a transmission gear system (8), comprises a rotor (6), extends coaxially with the input shaft (2), is mounted in a holding bore (18) in a gear casing part (10) and carries an output wheel (9) of the transmission gear system (8), characterised in that the transmission gear system is formed as a planetary gear system (8) and the output wheel as a sun wheel (9), with a mounting (11, 12), which is disposed between the sun wheel (9) and the rotor (6), of the rotor shaft (7) exhibiting radial (17) and axial play (19) with respect to the holding bore (18) and being guided in a floating manner by way of damping means in the annular gap created by the radial play (17).

2. Mechanically driven supercharger according to claim 1, with the rotor shaft (7) being mounted in the holding bore (18) via two angular contact ball bearings disposed in a guide bush (13), and the rotor (6) can be pre-assembled and balanced with the rotor shaft (7), the angular contact ball bearings (11, 12), the guide bush (13) and the sun wheel (9) as a unit, characterised in that the guide bush is guided in a floating manner in the holding bore and guided with axial play (19) between contact surfaces (16) of the part (10) which is rigid with the casing by way of a radial collar (14), which it comprises at its end which faces the rotor (6), and by way of a ring (15), which is secured to it.

3. Mechanically driven supercharger according to claim 1, characterised in that a component flow of the lubricating oil which is supplied to the angular contact ball bearings (11, 12) serves as the damping means.

4. Mechanically driven supercharger according to claim 1 or claim 3, characterised in that an elastic ring (20), which simultaneously seals off the radial gap (17), serves as the damping means.

5. Mechanically driven supercharger according to claim 1, characterised in that the mounting comprises two angular contact ball bearings (11, 12) at a large support spacing on the rotor shaft (7).

6. Mechanically driven supercharger according to claim 2, characterised in that a shaft seal (26) is disposed between the rotor shaft (7) and the guide bush (13), and that the lubricating oil is supplied to the angular contact ball bearings (11, 12) in the area lying between them.

7. Mechanically driven supercharger according to claim 2, characterised in that a shaft seal (26) is disposed between the rotor shaft (7) and the guide bush (13), the sealing lip (27) of which seal and the boost pressure rises from the rotor shaft (7)*, the boost air conveying lubricating oil from a feed bore (25), which opens out immediately after the shaft seal (26), into the angular contact ball bearings (11, 12).

8. Mechanically driven supercharger according to claim 2, characterised in that the outer surface of the guide bush (13) comprises recesses (lubricant collecting spaces 24, 29) which are produced along a chord and are separately connected to lubricant bores (23, 30) for the supply and removal of oil.

**Revendications**

1. Compresseur de suralimentation (1) à commande mécanique pour un moteur à combustion, comportant un arbre (7) de rotor (6) entraîné par le moteur à combustion au moyen d'un arbre d'entrée (2) et d'un engrenage multiplicateur (8), lequel arbre de rotor est disposé coaxialement à l'arbre d'entrée (2), est monté sur palier dans un alésage de montage (18) d'un élément (10) de carter d'engrenage et porte une roue de sortie (9) de l'engrenage multiplicateur (8), **caractérisé** en ce que l'engrenage multiplicateur est formé par un engrenage planétaire (8) et ladite roue de sortie par un pignon planétaire (9), et en ce qu'un agencement de palier (11, 12) de l'arbre de rotor (7) entre le pignon planétaire (9) et le rotor (6) présente du jeu radial (17) et axial (19) par rapport à l'alésage de montage (18) et est guidé de manière flottante par un moyen d'amortissement dans l'intervalle annulaire créé par le jeu radial (17).

2. Compresseur de suralimentation à commande mécanique selon la revendication 1, comportant un agencement de palier de l'arbre de rotor (7) dans l'alésage de montage (18) au moyen de deux roulements à billes à disposition oblique montés dans une douille de guidage (13), de sorte que le rotor (6) peut être monté et équilibré au préalable en tant que sous-ensemble avec l'arbre de rotor (7), les roulements à billes (11, 12), la douille de guidage (13) et le pignon planétaire (9), **caracté-**

risé en ce que la douille de guidage est montée de manière flottante dans l'alésage de montage et est guidée avec un jeu axial (19) entre des surfaces d'appui (16) de l'élément de carter (10) au moyen d'un collet radial (14) qu'elle présente à son extrémité du côté du rotor (6) et au moyen d'un anneau (15) fixé à la douille.

3. Compresseur de suralimentation à commande mécanique selon la revendication 1, **caractérisé** en ce qu'une part du débit de lubrifiant amené aux roulements à billes (11, 12) sert de moyen d'amortissement.

4. Compresseur de suralimentation à commande mécanique selon l'une des revendications 1 ou 3, **caractérisé** en ce qu'un anneau élastique (20) assurant l'étanchéité dans ledit intervalle radial (17) sert en même temps de moyen d'amortissement.

5. Compresseur de suralimentation à commande mécanique selon la revendication 1, **caractérisé** en ce que l'agencement de palier comporte deux roulements à billes à disposition oblique (11, 12) présentant un grand écartement sur l'arbre de rotor (7).

6. Compresseur de suralimentation à commande mécanique selon la revendication 2, **caractérisé** en ce qu'un joint d'étanchéité d'arbre (26) est disposé entre l'arbre de rotor (7) et la douille de guidage (13) et en ce que l'amenée de lubrifiant aux roulements à billes (11, 12) s'effectue dans la zone située entre ceux-ci.

7. Compresseur de suralimentation à commande mécanique selon la revendication 2, **caractérisé** en ce qu'un joint d'étanchéité d'arbre (26) est disposé entre l'arbre de rotor (7) et la douille de guidage (13) et comporte une lèvre d'étanchéité (27) qui se soulève de l'arbre (7) sous l'effet de la pression du compresseur, de sorte que l'air comprimé entraîne dans les roulements à billes (11, 12) du lubrifiant sortant d'un trou d'amenée (25) débouchant directement derrière le joint d'étanchéité d'arbre (26).

8. Compresseur de suralimentation à commande mécanique selon la revendication 2, **caractérisé** en ce que la douille de guidage (13) comporte, sur sa périphérie, des évidements (chambres collectrices de lubrifiant 24, 29) ménagés suivant un tracé en corde et reliés séparément à des trous respectifs (23, 30) d'amenée et d'évacuation de lubrifiant.